Europäisches Patentamt

European Patent Office

Office européen des brevets

(11) Publication number: **0 609 772 A1**

## EUROPEAN PATENT APPLICATION

(21) Application number: **94101181.9**

(22) Date of filing: **27.01.94**

(51) Int. Cl.5: **B29C 67/00**

(30) Priority: **01.02.93 JP 14905/93**

(43) Date of publication of application:
**10.08.94 Bulletin 94/32**

(84) Designated Contracting States:
**DE GB**

(71) Applicant: **SONY CORPORATION**
**7-35, Kitashinagawa 6-chome**
**Shinagawa-ku**
**Tokyo(JP)**

(72) Inventor: **Asano, Junichi**
**c/o. Sony Corporation,**
**7-35, Kitashinagawa 6-chome**
**Shinagawa-ku, Tokyo(JP)**

(74) Representative: **TER MEER - MÜLLER -**
**STEINMEISTER & PARTNER**
**Mauerkircherstrasse 45**
**D-81679 München (DE)**

(54) **Method of and apparatus for optically shaping a photo-setting resin.**

(57) When a photo-setting resin is scanned and set with a light beam in an isometric section therein, photo-setting resin is scanned along skipped or decimated scanning lines, rather than along adjacent scanning lines, and thereafter scanned with a light beam along scanning lines between the previous scanning lines until finally the photo-setting resin is scanned over its entire surface to form scanned set layers therein. The photo-setting resin is therefore prevented from being deformed.

FIG. I

## BACKGROUND OF THE INVENTION

Field of the Invention:

The present invention relates to a method of and an apparatus for optically shaping a photo-setting resin such as an ultraviolet-curing resin into a desired resin model by applying a light beam to the photo-setting resin and scanning the same with the applied light beam, and more particularly to a method of and an apparatus for optically shaping a photo-setting resin into a desired resin model by repeatedly scanning the photo-setting resin with a light beam along scanning lines, while skipping or decimating a predetermined number of scanning lines, rather than along adjacent scanning lines, and thereafter scanning the photo-setting resin with a light beam along scanning lines between the previous scanning lines until finally the photo-setting resin is scanned over its entire surface to form scanned set layers therein, thus preventing the photo-setting resin from being deformed due to shrinkage.

Description of the Related Art:

Attempts have heretofore been made to scan the surface of an ultraviolet-curing resin solution stored in a tank with an ultraviolet laser beam while turning on and off the ultraviolet laser beam thereby producing a scanned set layer of ultraviolet-curing resin, and successively stacking such scanned set layers into a three-dimensional desired resin model. Such a resin model is typically used as a master model for fabricating products. Therefore, it is necessary to increase the accuracy with which the ultraviolet-curing resin is shaped, the bonding strength between adjacent scanned set layers, and the efficiency with which the ultraviolet-curing resin is shaped.

According to one optical shaping process, an ultraviolet laser beam is generated by an ultraviolet laser oscillator, turned on and off and scanned under the control of an optical system which has a galvanometer mirror and a shutter, and applied to the surface of an ultraviolet-curing resin solution stored in a tank. The tank accommodates therein a vertically movable elevator which can block the ultraviolet laser beam. A resin solution layer that is interposed between the surface of the ultraviolet-curing resin solution and the elevator is set by the ultraviolet laser beam applied thereto.

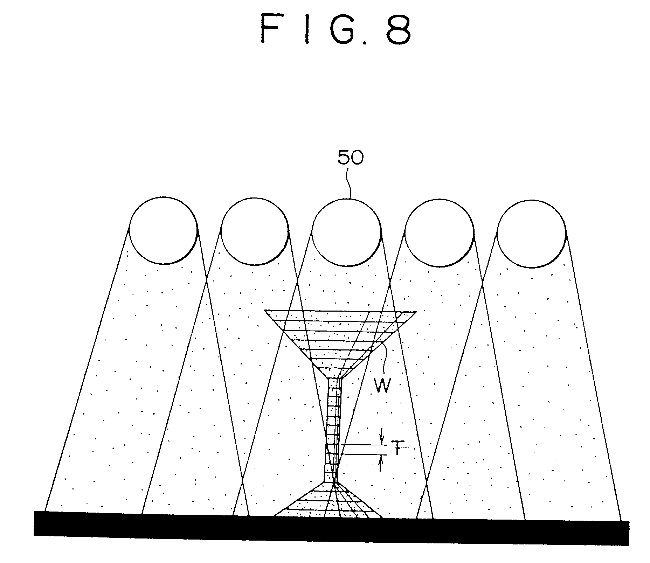

In the optical shaping process, the elevator is in a lifted position, and a resin solution layer that is present between the surface of the ultraviolet-curing resin solution and the elevator is set by the ultraviolet laser beam applied thereto, thereby forming a first scanned set layer. Then, the elevator is lowered a distance corresponding to the first scanned set layer, and the scanning ultraviolet laser beam is applied to form a second scanned set layer over the first scanned set layer. Subsequently, scanned set layers are successively formed downwardly until a final scanned set layer is formed. After the final scanned set layer is formed, the elevator is lifted to remove a desired resin model, which is composed of the stack of scanned set layers thus produced, out of the resin solution. To finally set the resin model, the resin model, designated by W in FIG. 8 of the accompanying drawings, is irradiated with an ultraviolet radiation emitted from an ultraviolet lamp 50 for a long period of time.

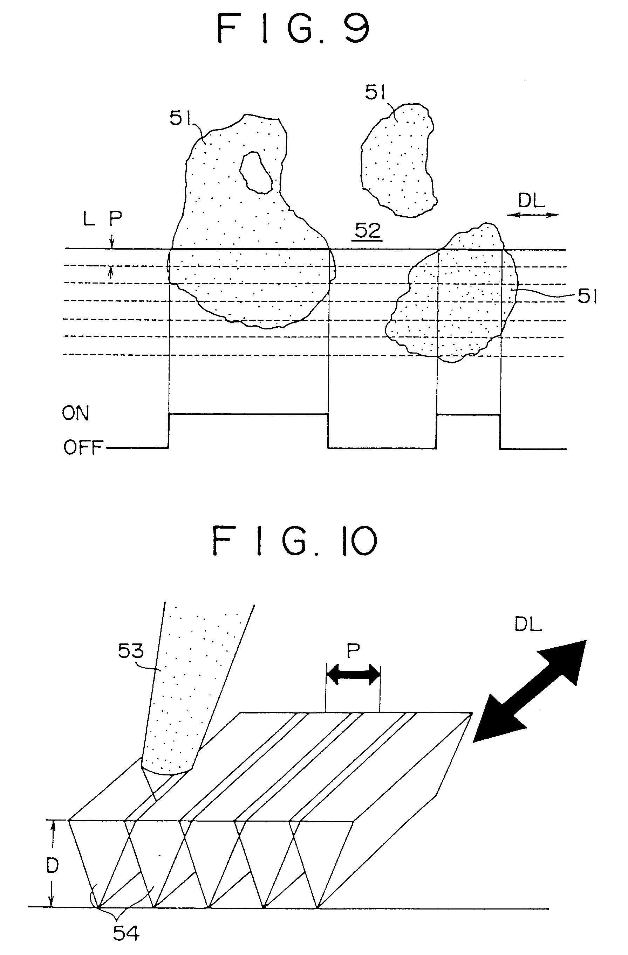

A horizontal plane in the ultraviolet-curing resin solution within each vertical distance that the elevator traverses on its vertical movement is hereinafter referred to as an isometric section. FIG. 9 of the accompanying drawings is a plan view of such an isometric section. The isometric section contains regions (hereinafter referred to as "spans") 51 where the resin solution is to be set and a region 52 where the resin solution is not to be set, depending on the resin model W to be fabricated. Specifically, a transverse section of the resin solution shown in FIG. 8 is illustrated in FIG. 9.

As shown in FIGS. 9 and 10 of the accompanying drawings, an ultraviolet laser beam 53 generated by an ultraviolet laser oscillator is scanned in a scanning direction DL over the resin solution layer by an optical system. The ultraviolet laser beam is turned on, i.e., actually a shutter (AOM) is open, within the set regions 51, and is turned off, i.e., actually the shutter (AOM) is closed, within the unset region 52. When the scanning along one scanning line L is over, the optical system is controlled to shift the ultraviolet laser beam by a scanning pitch P, and then scanned in the scanning direction DL over the resin solution layer.

When the ultraviolet laser beam is applied to the ultraviolet-curing resin solution, the radiation energy thereof is progressively reduced as it enters the ultraviolet-curing resin solution. Therefore, from a microscopic viewpoint, each region 54 of the ultraviolet-curing resin solution which is irradiated with the ultraviolet laser beam, i.e., a scanned set layer, contains sharp lower edges of set resin.

The scanning set layers 54 in one isometric section are formed in this fashion. To form a stack of successive scanned set layers of ultraviolet-curing resin, an upper scanned set layer is produced by an ultraviolet laser beam whose radiation energy is strong enough to irradiate a lower resin solution layer, so that the depth D to which the resin solution is set across the upper-layer isometric section is larger than the actual thickness T (see FIG. 8) of the upper scanned set layer. In this manner, the successive scanned set layers of ultraviolet-curing resin are joined together with a large bonding strength.

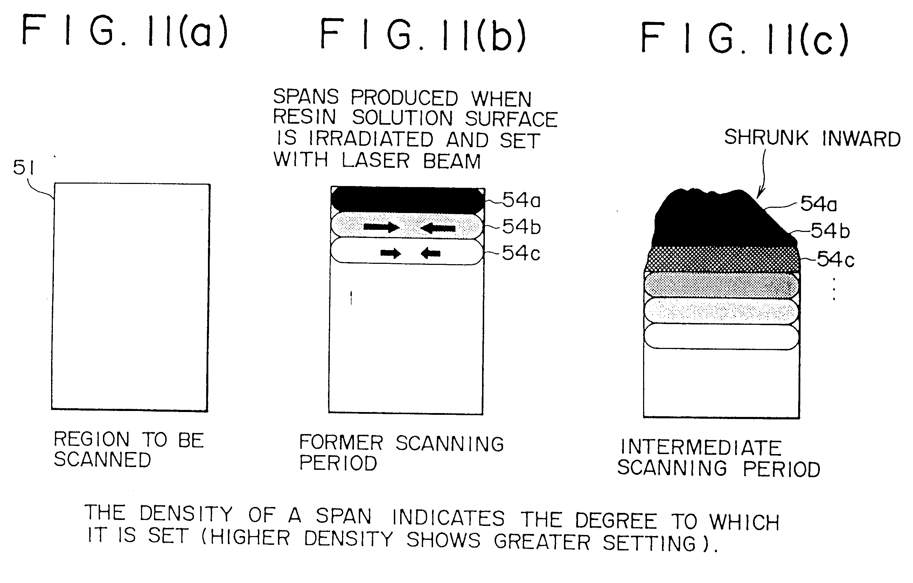

In the formation of scanning set layers in one isometric section, it has been customary to scan a span on a certain scanning line with a light beam and thereafter to scan a span on a scanning line next to the previous scanning line. For example, if scanned set layers in one isometric section are to be produced in a region 51 as shown in FIG. 11(a) of the accompanying drawings, the resin solution is scanned in a raster scanning mode as shown.

It takes a considerable period of time for a photo-setting resin solution to complete its setting after it has gradually started to be set by exposure to a radiation such as ultraviolet radiation. Furthermore, inasmuch the irradiated regions 54 have sharp lower edges as shown in FIG. 10, the photo-setting resin solution tends to shrink in the scanning direction DL when it is set.

When an irradiated region 54a along a first scanning line as shown in FIG. 11(b) of the accompanying drawings is set, it is subjected to not only the shrinking force along the first scanning line, but also the shrinking force in an irradiated region 54b along an adjacent second scanning line, and the shrinking force in an irradiated region 54c along a third scanning line. As a result, when the photo-setting resin solution is irradiated along an nth scanning line, the first scanning line suffers a combination of shrinking forces along the n scanning lines that have been irradiated so far.

Consequently, the shrinkage factor of the irradiated region that is scanned along the first scanning line and the shrinkage factor of the irradiated region that is scanned along the last scanning line differ from each other. The irradiated region that is scanned along the first scanning line, in particular, is excessively deformed as shown in FIG. 11(c) of the accompanying drawings. Such a problem manifests itself when a model is shaped on a free solution surface, i.e., a solution surface with no shaped layer present therebelow.

## SUMMARY OF THE INVENTION

It is therefore an object of the present invention to provide a method of and an apparatus for optically shaping a photo-setting resin into a resin model while preventing the resin model from being deformed when it is set based on a special process of scanning the photo-setting resin along scanning lines.

To achieve the above object, there is provided in accordance with the present invention a method of optically shaping a photo-setting resin into a three-dimensional resin model by scanning successive resin solution layers of a photo-setting resin solution with a radiation beam to form a stack of scanned set layers of photo-setting resin, each of the successive resin solution layers having a shaped region of an isometric section, the method comprising the steps of scanning the photo-setting resin solution successively along scanning lines which are not adjacent to each other to set the photo-setting resin solution therealong, and scanning the photo-setting resin solution successively along scanning lines which are unset and not adjacent to each other to set the photo-setting resin solution therealong.

The present invention is particularly effective when the scanning of the radiation beam is raster scanning. Specifically, there is also provided a method of optically shaping a photo-setting resin into a three-dimensional resin model by raster-scanning successive resin solution layers of a photo-setting resin solution with a radiation beam to form a stack of scanned set layers of photo-setting resin, each of the successive resin solution layers having a shaped region of an isometric section, the method comprising the steps of scanning the photo-setting resin solution successively along raster scanning lines which are not adjacent to each other to set the photo-setting resin solution therealong, and scanning the photo-setting resin solution successively along raster scanning lines which are unset and not adjacent to each other to set the photo-setting resin solution therealong.

According to the present invention, the above object can also be achieved by an apparatus for optically shaping a photo-setting resin into a three-dimensional resin model, comprising a tank containing a photo-setting resin solution, optical scanner means for generating and scanning a radiation beam including a wavelength suitable for photo-setting the photo-setting resin solution over the photo-setting resin solution to produce scanned set layers therein, elevator means for vertically moving the scanned set layer produced when the photo-setting resin solution is scanned by the radiation beam, and control means for controlling the optical scanner means and the elevator means, the control means comprising a three-dimensional shape information memory for storing at least part of three-dimensional shape information of the three-dimensional resin model to be formed, a scanned set layer information extractor for extracting information relative to scanned set layers which are to be formed by the radiation beam without actuating the elevator means, from the three-dimensional shape information stored in the three-dimensional shape information memory, a scanning line information memory for storing the information relative to scanned set layers, as scanning line information, extracted by the scanned set layer information extractor in association with a series of numbers, and means for controlling the optical scanner means to scan a scanned set layer with the radiation beam based on scanning line information stored in the scanning line information memory such that when scanning of a scanned set layer with the radiation beam based on certain scanning line information associated with a number, scanning of a next scanned set layer with the radiation beam is carried out based on scanning line information associated with a number which does not succeed to the number.

When a photo-setting resin is scanned and set with a radiation beam in an isometric section therein, photo-setting resin is scanned along skipped or decimated scanning lines, rather than along adjacent scanning lines, and thereafter scanned with a radiation beam along scanning lines between the previous scanning lines until finally the photo-setting resin is scanned over its entire surface.

More specifically, the optical scanner means generates and scans a radiation beam including a wavelength suitable for photo-setting the photo-setting resin solution over the photo-setting resin solution in the tank. When the scanning in one isometric section is over, a set resin layer generated by exposure to the radiation beam is vertically moved by the elevator means. Such a process is repeated to stack successively scanned set layers.

At first, information relative to scanned set layers which are to be formed by the radiation beam without actuating the elevator means is extracted by the scanned set layer information extractor from the three-dimensional shape information memory which stores at least part of three-dimensional shape information of the three-dimensional resin model to be formed.

Then, a series of numbers are associated with scanning line information obtained by the scanned set layer information extractor, and stored in the scanning line information memory. A scanned set layer is scanned with the radiation beam based on scanning line information stored in the scanning line information memory such that when scanning of a scanned set layer with the radiation beam based on certain scanning line information associated with a number, scanning of a next scanned set layer with the radiation beam is carried out based on scanning line information associated with a number which does not succeed to the number.

Specifically, the photo-setting resin is scanned not along adjacent scanning lines, but along skipped or decimated scanning lines, and thereafter scanned with a radiation beam along scanning lines between the previous scanning lines. The photo-setting resin is successively scanned in this manner until finally the photo-setting resin is scanned over its entire surface. Therefore, when one scanned set layer is set, it does not undergo external forces other than forces tending to shrink itself because adjacent regions are unset regions.

According to the present invention, as described above, when a photo-setting resin is scanned and set with a radiation beam, it is scanned and set successively along scanning lines that are not adjacent to each other and thereafter scanned and set successively along scanning lines that are unset and not adjacent to each other for setting a shaping region in an isometric section until the shaping region is scanned along all scanning lines. Consequently, when one scanned set layer is set and shrunk, it is not subjected to external forces. As a result, the shrinkage factors in an isometric section are rendered uniform, preventing a model to be shaped from being deformed.

The above and other objects, features, and advantages of the present invention will become apparent from the following description when taken in conjunction with the accompanying drawings which illustrate a preferred embodiment of the present invention by way of example.

BRIEF DESCRIPTION OF THE DRAWINGS

FIG. 1 is a block diagram of an optical shaping apparatus according to the present invention;

FIGS. 2(a) through 2(d) are plan views illustrative of an optical shaping method according to the present invention;

FIG. 3 is a flowchart of a processing sequence carried out by a control system;

FIG. 4 is a flowchart of a subroutine in a step 3 of the processing sequence shown in FIG. 3;

FIG. 5 is a flowchart of the subroutine in the step 3 of the processing sequence shown in FIG. 3;

FIG. 6 is a plan view illustrative of the relationship between the number of divisions, the scanning pitch, and the delta in an embodiment of the present invention;

FIGS. 7(a) through 7(c) are plan views illustrative of the relationship between the resolution, the scanning pitch, the scanning lines, and the span in the embodiment of the present invention;

FIG. 8 is a side elevational view illustrative of a conventional optical shaping method, showing the step of finally setting scanned set layers that have been stacked;

FIG. 9 is a plan view illustrative of the conventional optical shaping method, showing set and unset regions and a scanning direction in one isometric section;

FIG. 10 is a perspective view illustrative of the conventional optical shaping method, showing a scanning direction and a set depth in one isometric section; and

FIGS. 11(a) through 11(c) are plan views illustrative of the conventional optical shaping method, showing the manner in which irradiated regions are set along scanning lines.

## DETAILED DESCRIPTION OF THE PREFERRED EMBODIMENT

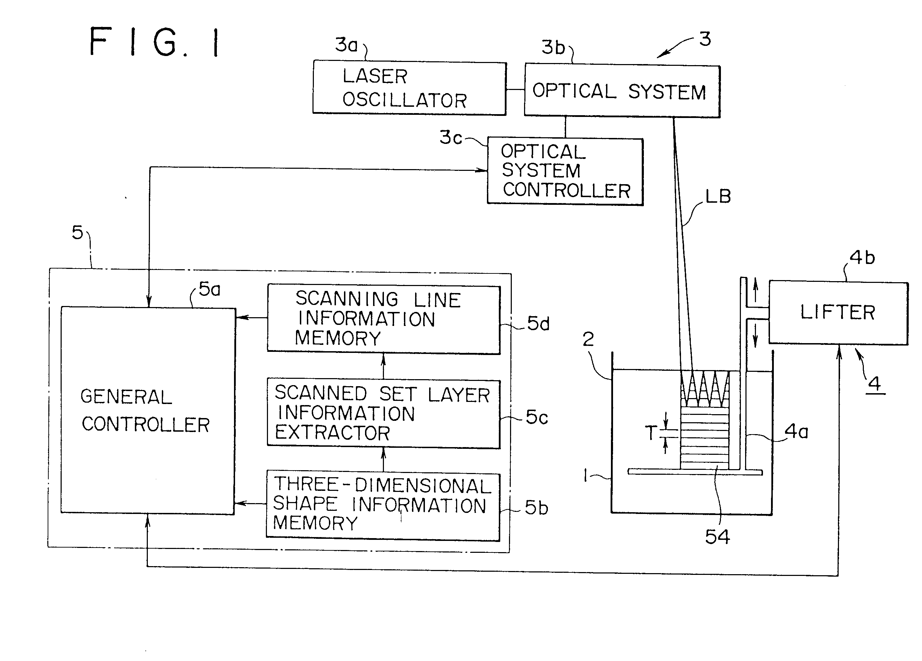

As shown in FIG. 1, an optical shaping apparatus according to the present invention includes a tank 2 containing a photo-setting resin solution 1 which can be set due to addition polymerization when exposed to light LB. For example, when exposed to light, a vinyl monomer such as styrene, methyl methacrylate, and vinyl acetate polymerizes even in the absence of a photopolymerization initiator or in the presence of a sensitizer or dye which absorbs ultraviolet radiation.

The photo-setting resin solution 1 that can be employed in the present invention is not limited to any materials, but may be a resin which can be set into a solid state even if it is of a liquid state when not set. The light LB may be an ultraviolet radiation or other light selected depending on the photosetting resin solution 1.

The tank 2 accommodates therein an elevator 4a having a table for supporting set resin layers thereon, the table being capable of blocking light against transmission therethrough. The elevator 4a can be vertically moved in the tank 2 by a lifter 4b that is positioned outside of the tank 2. The lifter 4b can mechanically elevate and lower the elevator 4a and control the vertical movement of the elevator 4a. The elevator 4a and the lifter 4b jointly serve as an elevator system 4. The lifter 4b is supplied with a command signal from a general controller 5a of a control system 5. The general controller 5a supplies a command signal to the lifter 4b based on information supplied to or from an optical scanning system 3.

For example, when the general controller 5a detects the completion of scanning over one isometric section based on information supplied from the optical scanning system 3, the general controller 5a applies a command signal to the lifter 4b to cause the lifter 4b to lower the elevator 4a a distance or pitch that is equal to the thickness T of a scanned set layer that has been formed in the isometric section.

The optical scanning system 3 comprises a laser oscillator 3a for generating a laser beam such as an ultraviolet laser beam, an optical system 3b for scanning the laser beam generated by the laser oscillator 3a over the surface of the photo-setting resin solution 1 in a predetermined scanning pattern, and an optical system controller 3c for controlling the optical system 3b. The optical system 3b includes a shutter (AOM) for selectively passing and blocking the laser beam, and a voltage applicator and a galvanometric mirror for changing the direction of the laser beam, and can turn on and off the laser beam, vary the intensity or radiation energy of the laser beam, change the path or direction of the laser beam, and control the speed at which the laser beam is scanned. The optical system controller 3c supplies the optical system 3b with a command signal relative to scanning conditions according to the predetermined scanning pattern.

The optical scanning system 3 operates essentially based on basic pattern data that have been supplied in advance to the general controller 5a. Specific scanning conditions supplied from the optical system controller 3c to the optical system 3b may be modified by command signals that are given from the control system 5 to the optical system controller 3c.

The general controller 5a of the control system 5 controls the elevator system 4 and the optical scanning system 3 in a mutually related manner based on previously supplied data depending on a resin model to be formed. The control system 5 includes, in addition to the general controller 5a, a three-dimensional shape information memory 5b, a scanned set layer information extractor 5c, and a scanning line information memory 5d.

The lifter 4b, the optical system controller 3c, and the control system 5 are shown as separate from each other in FIG. 1 for an easier understanding of their functions. However, the lifter 4b, the optical system controller 3c, and the control system 5 may be combined into an information processing system insofar as it has their functions.

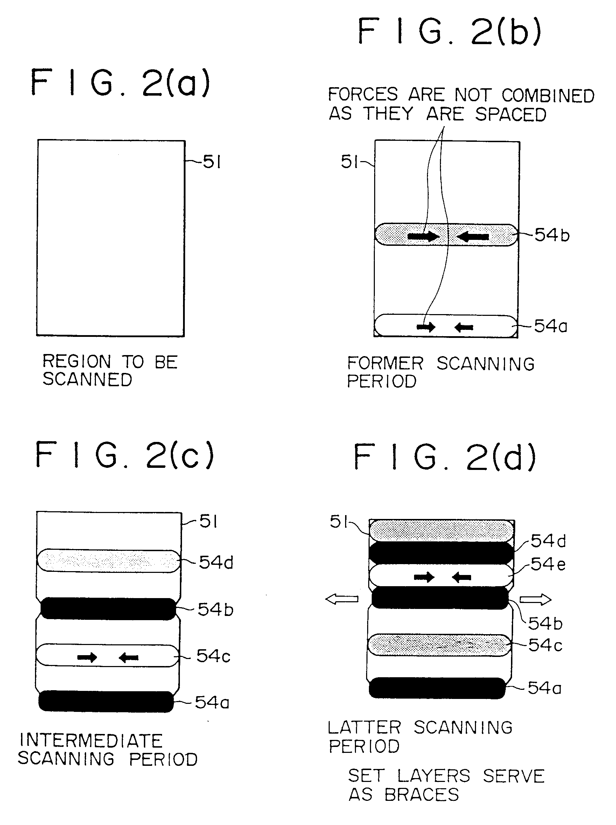

Respective processing sequences of the three-dimensional shape information memory 5b, the scanned set layer information extractor 5c, and the scanning line information memory 5d will be described below. For an easier understanding of the basic principles of the processing sequences, the present invention will be described below with respect to the raster banning within an isometric section as shown in FIGS. 2(a) through 2(d) by way of illustrative example.

The three-dimensional shape information memory 5b stores all information relative to the three-dimensional shape of a resin model W to be formed, or at least information relative to the three-dimensional shapes of all isometric sections where shaped regions are enclosed by contour lines.

According to the present invention, a concept "span" is introduced in storing information relative to the three-dimensional shape of a model to be shaped. The "span" as it is employed in the present invention refers to the intersection between a polygonal shape in an isometric section and a scanning line traced by a light beam. A span region is irradiated with the light beam.

Span data can be expressed by an information format that is represented by Yi Xi:0 Xi:1 Xi:2 ⋯ Xi:nD Yi + 1 Xi + 1:0 ⋯ D where Yi is a y value in the same scanning line upon horizontal scanning (X direction) and an x value in the same scanning line upon vertical scanning (Y direction), and Xi:j is an x value at a point of intersection between a scanning line upon horizontal scanning and a polygonal shape and a y value at a point of intersection between a scanning line upon vertical scanning and a polygonal shape.

The scanned set layer information extractor 5c extracts only information relative to a scanned set layer which is a shaped region in one isometric section from the three-dimensional information stored in the three-dimensional shape information memory 5b. Specifically, the general controller 5a distinguishes a set region from an unset region in a certain isometric section for the control of the turning-on and -off of the laser beam in the optical system 3b, and the scanned set layer information extractor 5c selects and reads only information relative to such a set region. The information extracted by the scanned set layer information extractor 5c will be used as basic information in the shaping process described below.

The scanning line information memory 5d is a memory for storing a series of numbers, e.g., successive numerals or successive letters, which correspond to the scanned set layer information extracted by the scanned set layer information extractor 5c. When one isometric section is scanned, the scanning is effected based on the scanning line information that is stored in the scanning line information memory 5d. When the scanning based on the information with respect to one scanning line is finished, scanning line information having a number that does not succeed to the number allotted to the previously read scanning line information is extracted, and next scanning is carried out base on the extracted scanning line information.

Operation of the optical shaping apparatus will be described below. FIGS. 2(a) through 2(d) illustrate in plan an optical shaping method according to the present invention. In order to set a shaping region 51 in a certain isometric section as shown in FIG. 2(a), a first scan is carried out thereby to form a scanned set layer 54a (see FIG. 2(b)), and then a scanning line which is not adjacent to the previously scanned set layer 54a is selected and a second scan is carried out along the selected scanning line thereby to form a scanned set layer 54b.

The scanned set layers 54a, 54b are now formed as shown in FIG. 2(b). In order to form a scanned set layer 54c (see FIG. 2(c)) with a third scan, a scanning line which is not adjacent to the scanned set layers 54a, 54b that are being set by the first and second scans is selected as shown in FIG. 2(c).

In this manner, scans are successively repeated such that scanning lines that are unset and not adjacent to each other are selected and scans are carried out along the selected scanning lines, until all scanning lines are scanned.

With the optical shaping method according to the present invention, since the opposite sides of each of scanned set layers that are successively scanned and set are composed of an unset resin solution, the shrinkage of the scanned set layer which occurs when it is set is governed by only the scanned set layer itself. Therefore, each scanned set layer is shrunk uniformly without being affected by the shrinkage of any other scanned set layers unlike the conventional optical shaping process.

The above scanning process is continuously effected to a point where it finally becomes impossible to select a scanning line that is not adjacent to any other scanning lines as shown in FIG. 2(d). At this time, the setting of scanning set layers along adjacent scanning lines has already been completed. As a result, the shrinkage of the scanned set layer that is set by the final scan is suppressed by the rigidity of the scanned set layers that have already been set. Consequently, the isometric section is prevented from being suffering setting-induced deformation.

Specifically, the above decimated scanning process is carried out by the control system 5 of the optical shaping apparatus shown in FIG. 1 as follows:

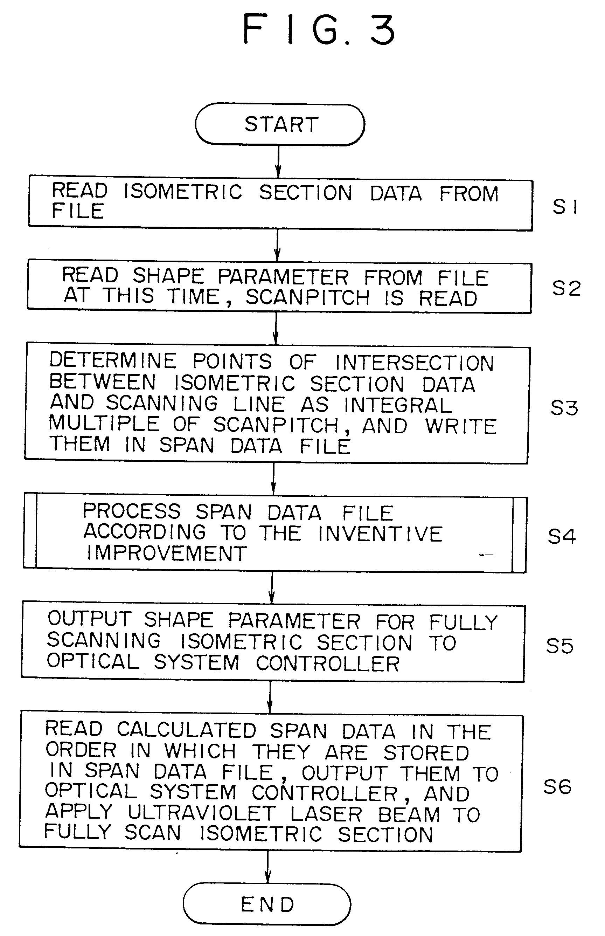

As shown in FIG. 3, isometric section data and a shaping parameter (e.g., a scanning pitch) are read from the three-dimensional shape information memory 5b which stores three-dimensional shape information of a model into the scanned set layer information extractor 5c in steps 1, 2. Then, points of intersection between the isometric section and scanning lines, whose number is an integral multiple of the scanning pitch, are calculated from the isometric section data and the scanning pitch, and stored in the scanning line information memory 5d in a step 3.

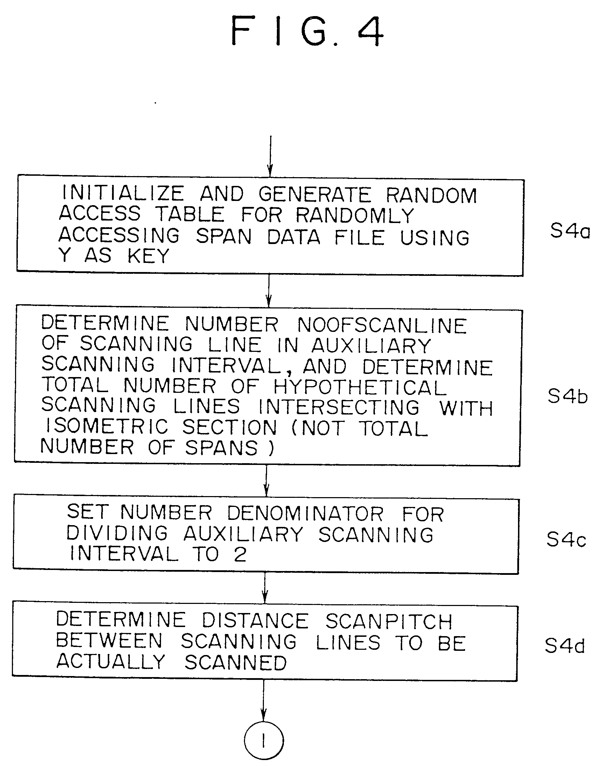

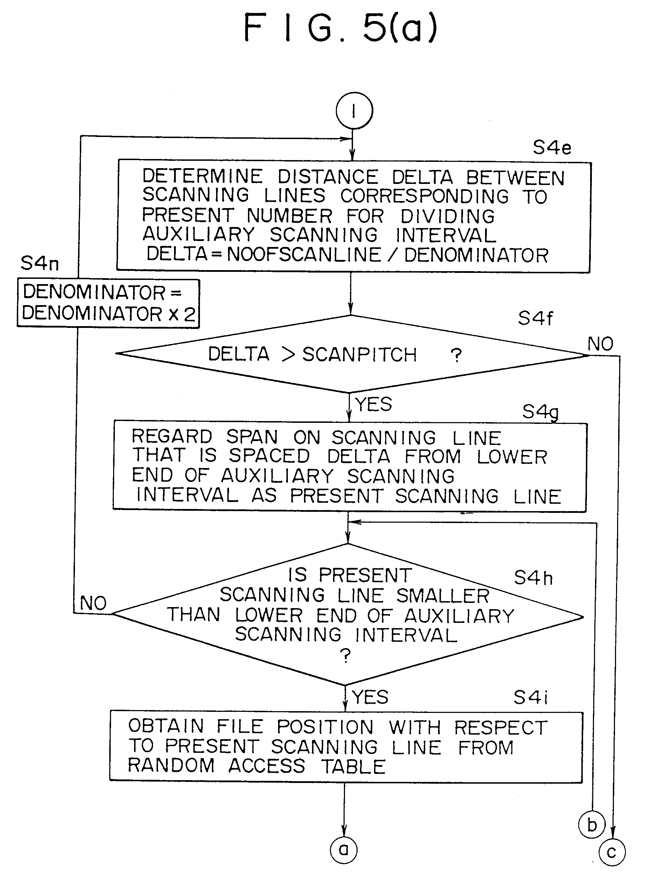

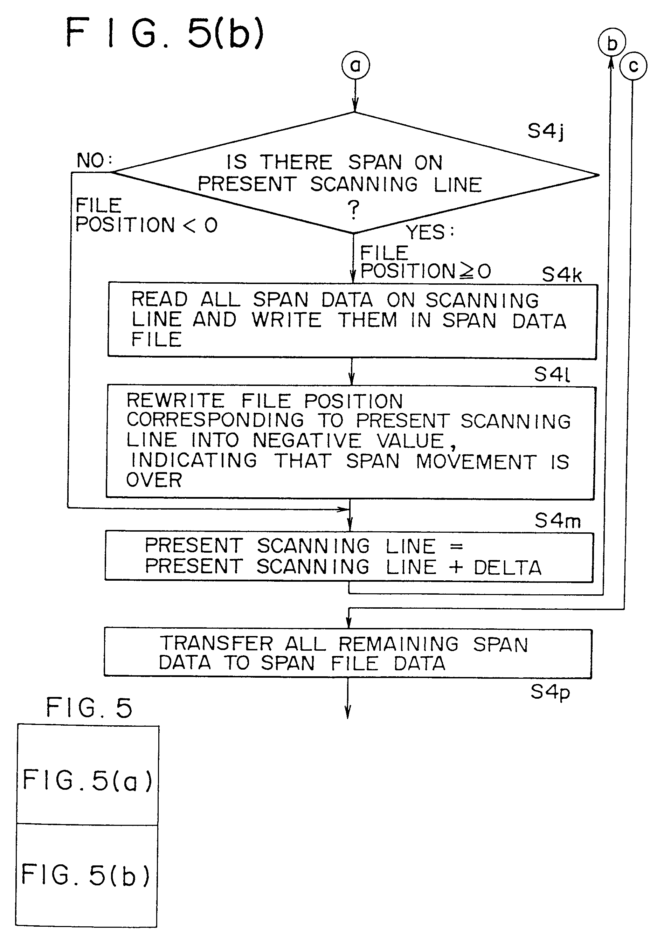

Thereafter, the information stored in the scanning line information memory 5d is rewritten according to a procedure shown in FIGS. 4 and 5 in a step 4. More specifically, after initialization in a step 4a, the number noofScanLine of hypothetical scanning lines which intersect with the isometric section is determined in a step 4b. The number noofScanLine of hypothetical scanning lines is not equal to the total number of spans, which is determined by a scanning pitch scanPitch (described later on) that is actually set.

An initial value for dividing an auxiliary scanning interval is set to denominator = 2, for example, in a step 4c, and the distance or interval between scanning lines along which actual scans are to take plate is determined in a step 4d.

Then, the distance delta between scanning lines which corresponds to the present number denominator for dividing the auxiliary scanning interval is calculated according to delta = noofScanLine/denominator in a step 4e. If the calculated distance delta between scanning lines is greater than the scanning pitch scanPitch in a step 4f, then a span on a scanning line that is spaced the distance delta from the lower end of the auxiliary scanning interval where scanning starts is regarded as a present scanning line in a step 4g.

If the present scanning line is not the upper end of the auxiliary scanning interval where scanning ends in a step 4h, information relative to the present scanning line is read in a step 4i, and it is determined whether there is a span on the present scanning line or not in a step 4j. If a file position is positive, then actual data on the scanning line are read and stored in a step 4k, and the file position with respect to the present scanning line is rewritten into a negative value, indicating that movement of the span data is completed in a step 4l.

Thereafter, a scanning line to be scanned next is set to a value which is the sum of the present scanning line and the distance delta between scanning lines in a step 4m. The steps 4i ~ 4l are repeated until the present scanning line reaches the upper end of the auxiliary scanning interval.

If the present scanning line reaches the upper end of the auxiliary scanning interval in the step 4h, then the number denominator for dividing the auxiliary scanning interval is doubled in a step 4n. Thereafter, the steps 4e ~ 4m are repeated.

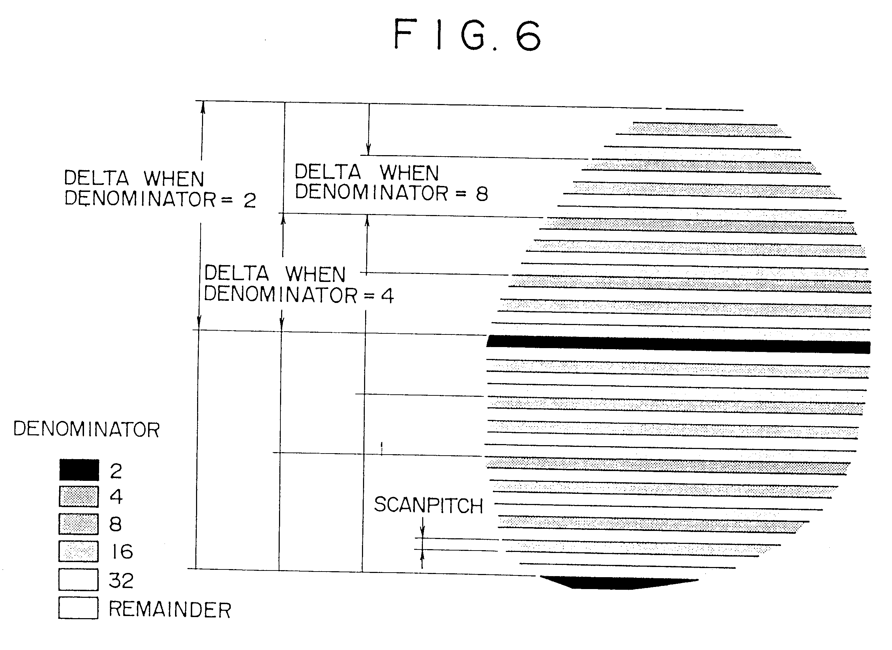

The data that have been produced by the above process are restored in the scanning line information memory 5d, after which shape information for fully scanning the shaping region in the isometric section is outputted to the optical system controller 3c in a step 5. The span data restored in the scanning line information memory 5d are successively read and outputted to the optical system controller 3c, which controls the laser oscillator 3a and the optical system 3b to shape the model out of the resin solution in a step 6. FIG. 6 shows in plan a sequence of scans that have been carried out according to the above process. In FIG. 6, a scanned set layer with a smaller number denominator (= 2, 4, 8, ⋯ ) for dividing the auxiliary scanning interval is scanned earlier.

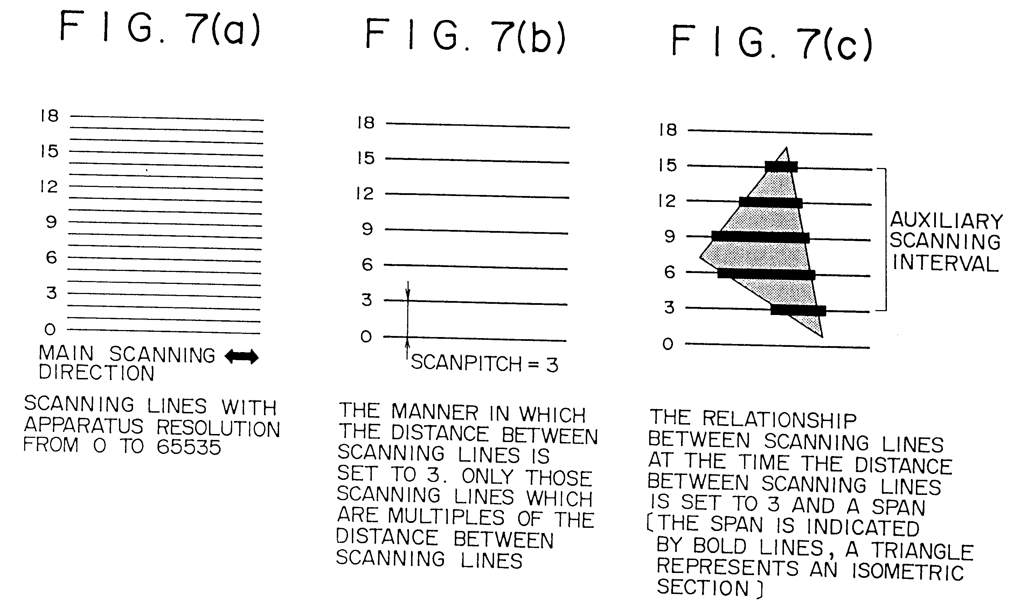

The procedure for selecting a scanning line that is not adjacent to other scanning lines is not limited to the embodiment shown in FIGS. 3 through 7(a) ~ 7(c), but may be carried out in any of various other ways.

It is to be understood that the above-described embodiments are merely illustrative of the principles of the invention. Various modifications and changes may be made thereto by those skilled in the art which will embody the principles of the invention and fall within the spirit and scope thereof.

**Claims**

1. A method of optically shaping a photo-setting resin into a three-dimensional resin model by scanning successive resin solution layers of a photo-setting resin solution with a radiation beam to form a stack of scanned set layers of photo-setting resin, each of said successive resin solution layers having a shaped region of an isometric section, said method comprising the steps of:

    (a) scanning the photo-setting resin solution successively along scanning lines which are not adjacent to each other to set the photo-setting resin solution therealong; and

    (b) scanning the photo-setting resin solution successively along scanning lines which are unset and not adjacent to each other to set the photo-setting resin solution therealong.

2. A method of optically shaping a photo-setting resin into a three-dimensional resin model by raster-scanning successive resin solution layers of a photo-setting resin solution with a radiation beam to form a stack of scanned set layers of photo-setting resin, each of said successive resin solution layers having a shaped region of an isometric section, said method comprising the steps of:

    (a) scanning the photo-setting resin solution successively along raster scanning lines which are not adjacent to each other to set the photo-setting resin solution therealong; and

    (b) scanning the photo-setting resin solution successively along raster scanning lines which are unset and not adjacent to each other to set the photo-setting resin solution therealong.

3. An apparatus for optically shaping a photo-setting resin into a three-dimensional resin model, comprising:

    a tank containing a photo-setting resin solution;

    optical scanner means for generating and scanning a radiation beam including a wavelength suitable for photo-setting said photo-setting resin solution over the photo-setting resin solution to produce scanned set layers therein;

elevator means for vertically moving the scanned set layers produced when said photo-setting resin solution is scanned by said radiation beam; and

control means for controlling said optical scanner means and said elevator means;

said control means comprising:

a three-dimensional shape information memory for storing at least part of three-dimensional shape information of the three-dimensional resin model to be formed;

a scanned set layer information extractor for extracting information relative to scanned set layers which are to be formed by the radiation beam without actuating said elevator means, from the three-dimensional shape information stored in said three-dimensional shape information memory;

a scanning line information memory for storing the information relative to scanned set layers, as scanning line information, extracted by said scanned set layer information extractor in association with a series of numbers; and

said control means for controlling said optical scanner means to scan a scanned set layer with the radiation beam based on scanning line information stored in said scanning line information memory such that when scanning of a scanned set layer with the radiation beam based on certain scanning line information associated with a number, scanning of a next scanned set layer with the radiation beam is carried out based on scanning line information associated with a number which does not succeed to said number.

# F I G. I

LASER OSCILLATOR — 3a

OPTICAL SYSTEM — 3b, 3

OPTICAL SYSTEM CONTROLLER — 3c

LB

LIFTER — 4b, 4

4a

2

54

T

I

GENERAL CONTROLLER — 5a, 5

SCANNING LINE INFORMATION MEMORY — 5d

SCANNED SET LAYER INFORMATION EXTRACTOR — 5c

THREE-DIMENSIONAL SHAPE INFORMATION MEMORY — 5b

# FIG. 2(a)

~51

REGION TO BE
SCANNED

# FIG. 2(b)

FORCES ARE NOT COMBINED
AS THEY ARE SPACED

51~

→ ← ~54b

→ ← ~54a

FORMER SCANNING
PERIOD

# FIG. 2(c)

~51

~54d

~54b

→ ← ~54c

~54a

INTERMEDIATE
SCANNING PERIOD

# FIG. 2(d)

51~

~54d

~54e

→ ←

~54b

~54c

~54a

LATTER SCANNING
PERIOD

SET LAYERS SERVE
AS BRACES

# F I G. 3

```
                    ┌──────────┐
                    │  START   │
                    └────┬─────┘
                         │
                         ▼
┌──────────────────────────────────────────┐
│ READ  ISOMETRIC  SECTION  DATA  FROM       │   S1
│ FILE                                       │
└──────────────────────────────────────────┘
                         │
                         ▼
┌──────────────────────────────────────────┐
│ READ SHAPE PARAMETER FROM FILE             │   S2
│ AT THIS TIME, SCANPITCH IS READ            │
└──────────────────────────────────────────┘
                         │
                         ▼
┌──────────────────────────────────────────┐
│ DETERMINE POINTS OF INTERSECTION           │
│ BETWEEN ISOMETRIC SECTION DATA             │
│ AND SCANNING LINE AS INTEGRAL              │   S3
│ MULTIPLE OF SCANPITCH, AND WRITE           │
│ THEM IN SPAN DATA FILE                     │
└──────────────────────────────────────────┘
                         │
                         ▼
┌──────────────────────────────────────────┐
│ ‖     PROCESS SPAN DATA FILE             ‖ │
│ ‖     ACCORDING TO THE INVENTIVE         ‖ │   S4
│ ‖     IMPROVEMENT                     —  ‖ │
└──────────────────────────────────────────┘
                         │
                         ▼
┌──────────────────────────────────────────┐
│ OUTPUT SHAPE PARAMETER FOR FULLY           │
│ SCANNING ISOMETRIC SECTION TO              │   S5
│ OPTICAL SYSTEM CONTROLLER                  │
└──────────────────────────────────────────┘
                         │
                         ▼
┌──────────────────────────────────────────┐
│ READ CALCULATED SPAN DATA IN THE           │
│ ORDER IN WHICH THEY ARE STORED             │
│ IN SPAN DATA FILE, OUTPUT THEM TO          │
│ OPTICAL SYSTEM CONTROLLER, AND             │   S6
│ APPLY ULTRAVIOLET LASER BEAM TO            │
│ FULLY SCAN ISOMETRIC SECTION               │
└──────────────────────────────────────────┘
                         │
                         ▼
                    ┌──────────┐
                    │  E N D   │
                    └──────────┘
```

11

# F I G. 4

INITIALIZE AND GENERATE RANDOM ACCESS TABLE FOR RANDOMLY ACCESSING SPAN DATA FILE USING Y AS KEY — S4a

DETERMINE NUMBER NOOFSCANLINE OF SCANNING LINE IN AUXILIARY SCANNING INTERVAL, AND DETERMINE TOTAL NUMBER OF HYPOTHETICAL SCANNING LINES INTERSECTING WITH ISOMETRIC SECTION (NOT TOTAL NUMBER OF SPANS) — S4b

SET NUMBER DENOMINATOR FOR DIVIDING AUXILIARY SCANNING INTERVAL TO 2 — S4c

DETERMINE DISTANCE SCANPITCH BETWEEN SCANNING LINES TO BE ACTUALLY SCANNED — S4d

( I )

EP 0 609 772 A1

# F I G. 5(a)

(I)

S4e

DETERMINE DISTANCE DELTA BETWEEN
SCANNING LINES CORRESPONDING TO
PRESENT NUMBER FOR DIVIDING
AUXILIARY SCANNING INTERVAL
DELTA = NOOFSCANLINE / DENOMINATOR

S4n

DENOMINATOR =
DENOMINATOR x 2

S4f

DELTA > SCANPITCH ?    NO

YES    S4g

REGARD SPAN ON SCANNING LINE
THAT IS SPACED DELTA FROM LOWER
END OF AUXILIARY SCANNING
INTERVAL AS PRESENT SCANNING LINE

IS PRESENT
SCANNING LINE SMALLER
THAN LOWER END OF AUXILIARY
SCANNING INTERVAL
?    S4h

NO

YES    S4i

OBTAIN FILE POSITION WITH RESPECT
TO PRESENT SCANNING LINE FROM
RANDOM ACCESS TABLE

(a)    (b)    (c)

# F I G. 5(b)

(a)

(b) (c)

S4j

IS THERE SPAN ON PRESENT SCANNING LINE ?

NO: FILE POSITION < 0

YES: FILE POSITION $\geqq$ 0

S4k

READ ALL SPAN DATA ON SCANNING LINE AND WRITE THEM IN SPAN DATA FILE

S4l

REWRITE FILE POSITION CORRESPONDING TO PRESENT SCANNING LINE INTO NEGATIVE VALUE, INDICATING THAT SPAN MOVEMENT IS OVER

S4m

PRESENT SCANNING LINE = PRESENT SCANNING LINE + DELTA

TRANSFER ALL REMAINING SPAN DATA TO SPAN FILE DATA

S4p

FIG. 5

| FIG. 5(a) |
|---|
| FIG. 5(b) |

# F I G. 6

DELTA WHEN DENOMINATOR = 2

DELTA WHEN DENOMINATOR = 8

DELTA WHEN DENOMINATOR = 4

SCANPITCH

DENOMINATOR

- 2
- 4
- 8
- 16
- 32
- REMAINDER

EP 0 609 772 A1

# F I G. 7(a)

18 —
15 —
12 —
9 —
6 —
3 —
0 —

MAIN SCANNING ◄►
DIRECTION

SCANNING LINES WITH
APPARATUS RESOLUTION
FROM 0 TO 65535

# F I G. 7(b)

18 ——
15 ——
12 ——
9 ——
6 ——
3 ——
0 ——

SCANPITCH = 3

THE MANNER IN WHICH
THE DISTANCE BETWEEN
SCANNING LINES IS
SET TO 3. ONLY THOSE
SCANNING LINES WHICH
ARE MULTIPLES OF THE
DISTANCE BETWEEN
SCANNING LINES

# F I G. 7(c)

18 ——
15 ——
12 ——
9 ——
6 ——
3 ——
0 ——

AUXILIARY
SCANNING
INTERVAL

THE RELATIONSHIP
BETWEEN SCANNING LINES
AT THE TIME THE DISTANCE
BETWEEN SCANNING LINES
IS SET TO 3 AND A SPAN
[THE SPAN IS INDICATED
BY BOLD LINES, A TRIANGLE
REPRESENTS AN ISOMETRIC
SECTION]

EP 0 609 772 A1

# F I G. 8

# F I G. 9

# F I G. 10

# F I G. II(a)

51

REGION TO BE
SCANNED

# F I G. II(b)

SPANS PRODUCED WHEN
RESIN SOLUTION SURFACE
IS IRRADIATED AND SET
WITH LASER BEAM

54a
54b
54c

FORMER SCANNING
PERIOD

# F I G. II(c)

SHRUNK INWARD

54a
54b
54c

INTERMEDIATE
SCANNING PERIOD

THE DENSITY OF A SPAN INDICATES THE DEGREE TO WHICH
IT IS SET (HIGHER DENSITY SHOWS GREATER SETTING).

EP 0 609 772 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-89 10801 (3D SYSTEMS INC.)<br>* claims 1,6; figure 5B *<br>--- | 1,2 | B29C67/00 |
| A | WO-A-92 20505 (3D SYSTEMS INC.)<br>* claim 1; figure 6A *<br>--- | 1-3 | |
| A | EP-A-0 429 196 (3D SYSTEMS INC.)<br>* claim 1; figure 8C *<br>----- | 1-3 | |
| | | | TECHNICAL FIELDS SEARCHED (Int.Cl.5)<br><br>B29C |

The present search report has been drawn up for all claims

| Place of search | Date of completion of the search | Examiner |
|---|---|---|
| THE HAGUE | 24 March 1994 | Kirsten, K |